# EUROPEAN PATENT SPECIFICATION

(11) **EP 3 674 050 B1**
(45) Date of publication and mention of the grant of the patent: **16.08.2023**
(21) Application number: 18848223.6
(22) Date of filing: 07.06.2018
(51) Int. Cl.: B29C 33/02, B29C 35/02, B29D 30/06

(54) **MOULD FOR VULCANIZING AND MOULDING TIRE**
FORM ZUM VULKANISIEREN UND FORMEN VON REIFEN
MATRICE POUR MOULAGE PAR VULCANISATION DE PNEUMATIQUE

(30) Priority: 21.08.2017 JP 2017158507
(43) Date of publication of application: 01.07.2020
(73) Proprietor: Bridgestone Corporation, Tokyo 104-8340 (JP)
(72) Inventor: ISHIHARA, Yasuyuki, Tokyo 104-8340 (JP)
(74) Representative: Marks & Clerk LLP
(86) International application number: PCT/JP2018/021935
(87) International publication number: WO 2019/039043

(56) References cited:
- WO-A1-2017/068846
- JP-A- S6 072 708
- JP-A- 2000 127 173
- JP-A- 2006 103 035
- JP-A- 2006 103 035
- JP-A- 2008 290 334
- US-A- 2 046 372
- US-A- 4 553 918
- US-A- 5 234 326
- US-A- 5 290 163
- US-A1- 2011 183 022
- US-A1- 2017 043 506

## Description

### [Technical Field]

The present invention relates to a mold for vulcanizing and molding an unvulcanized tire.

### [Background Art]

In general, in a tire vulcanizing device, a mold for vulcanizing and molding a tire is used for molding and vulcanizing a rugged pattern such as a tread at an outer surface of an unvulcanized green tire. The green tire accommodated in the mold for vulcanizing and molding a tire is vulcanized through a process in which the mold is heated by a heating device and heat is transferred from the mold to the green tire to heat the green tire.

The mold for vulcanizing and molding a tire performs vulcanization and molding by covering the periphery of the green tire and pressing its inner surface against the green tire surface. Therefore, for discharging air inside a closed space on the inside of the mold to the exterior, the mold is provided with a multiplicity of air vent holes. When vulcanization and molding are performed by use of such a mold for vulcanizing and molding a tire, green rubber compressed by the mold flows into the air vent holes and is vulcanized, whereby a multiplicity of spews (rubber hairs) are formed at the tire surface, leading to lowering in initial performance and external appearance quality of the tire.

In view of this problem, for avoiding the formation of such spews, molds for vulcanizing and molding a tire as described in Patent Documents 1 to 4 have been considered. Among these molds, a tread mold for pressing a tread surface of a green tire includes a plurality of segments divided in the tire circumferential direction. These segments each have at an inside surface thereof a design surface mold for pressing the tread surface and molding a design of the tread surface, the design surface mold is divided into a plurality of piece members divided in the tire circumferential direction, and these piece members are assembled and held on the inside of a holding member. In such a mold for vulcanizing and molding a tire, the gaps between the plurality of piece members are set to be gaps in such an extent as to permit passage of air therethrough but to prevent passage of rubber therethrough, whereby air inside the mold can be discharged to the exterior, and formation of spews is avoided.

On the other hand, in the vulcanization of a tire, heat is transferred differs depending on the shape of the tire and the rubber thicknesses at parts of the tire. In general, there is a tendency that heat is comparatively easily transferred in the vicinity of a width-directional center of the tread section of the tire, whereas heat is difficultly transferred at width-directionally outside sections of the tire, or the shoulder sections of the tire, due to larger thickness and amount of rubber. In this way, due to the temperature difference in the tire at the time of vulcanization, physical property values of the tire after vulcanization may differ from part to part, which may influence the performance of the tire. Therefore, it is desirable to hinder transfer of heat to the vicinity of the tire width-directional center of the tread section, and to transfer much heat to the shoulder sections of the tire.

The molds for vulcanizing and molding a tire described in Patent Documents 1 to 4 are able to avoid formation of spews. However, the piece members of these molds are divided in the tire circumferential direction, and the unit of a single piece member is a structure continuous in the width direction of the tire mounted in the mold. Therefore, even if transfer of heat in the vicinity of the tire width-directional center of the tread section is hindered, and much heat is transferred to the shoulder sections, the heat in the shoulder sections is transferred in the continuous piece member from the shoulder sections toward the tire width-directional center of the tread section. Thus, it has been difficult to prevent the temperature difference inside the tire at the time of vulcanization.

Further, in these molds for vulcanizing and molding a tire, the piece members are divided in the circumferential direction. Therefore, in the case where the tire design surface shape cannot be defined by repetition of a fixed shape toward the circumferential direction, at the time of dividing, a multiplicity of definitions of divided curved surface shapes is needed for forming slits at positions for easy venting of air, which causes a rise in cost. Further, since the piece members are each fixed to the holding member by an arch bridge system, a large concentrated stress is liable to be generated at front edges of divided curved surfaces. When the mold is used repeatedly, therefore, creep deformation is generated at the parts where a great concentrated stress is generated, whereby gaps may be formed between the piece members, generating a trouble of overflowing of rubber.

In addition, Patent Document 5 discloses a mold for vulcanizing and molding a tire. In this mold, in each segment, a molten metal is supplied as a second shot to a recess of a profile surface of a crude mold material of a first segment molded by a first shot by die-casting. The parts for machining margin is machined into a tread pattern by mechanical machining or electric discharge machining, and, from the back surface of this segment, an exhaust hole communicating with the atmosphere is formed on a line of the casting joint part in the tire circumferential direction.

In this mold for vulcanizing and molding a tire, fine gaps are formed due to solidification shrinkage of the casting material at the casting joint part between the part formed by the first shot and the part formed by the second shot. This casting joint part and the exhaust hole play the role of releasing air inside the mold to the exterior, thereby preventing formation of spews. Besides, since the fine gaps at the casting joint part are directed in the circumferential direction of the tire, transfer of heat in the segment from the shoulder sections of the tire toward the tire width-directional center of the tread section is partly hindered.

However, the part formed by the second shot is let flow into the recess of the part formed by the first shot. And, the part formed by the first shot other than the casting joint part is a mold continuous in the tire width direction. Therefore, hindrance of transfer of heat in the tire width direction is not sufficient, and it is difficult to prevent the possibility of that the temperature difference in the tire at the time of vulcanization would influence the performance of the tire.

In addition, such a mold for vulcanizing and molding a tire has had a drawback that the shape of a design surface should be formed by after-machining such as electric discharge machining.

### [Prior Art Document]

### [Patent Document]

Patent Document 1: JP 1993-220753 A. Patent Document 2: JP 2008-194946 A. Patent Document 3: JP 2009-202600 A. Patent Document 4: JP 2010-201632 A. Patent Document 5: JP 2001-150441 A.

Attention is also drawn to the disclosures of US 4 553 918, JP 2006 103035, US2011/183022, US 2017/0043506 and US 5 234 326.

### [Summary of Invention]

### [Underlying Problems to be solved by the Invention]

It is an object of the present invention to provide a mold for vulcanizing and molding a tire that is able to realize a reduction in the temperature difference between tire shoulder sections and the vicinity of a tire width-directionally central portion of a tread section at the time of vulcanization, to reduce the differences in physical property values from part to part of the tire, thereby enhancing performance of the tire, and to enhance workability and strength of the mold, while avoiding formation of spews at the surface of the tire.

### [Means to solve the Problems]

For achieving the above object, the present invention provides a mold as claimed in claim 1.

Since the present invention is configured as above-mentioned, it is possible, with the design surface mold includes the plurality of piece members divided in the tire width direction, to hinder transfer of heat in the tire width direction in the design mold surface and reduce transfer of heat from shoulder sections to the vicinity of a tire width-directionally central portion of the tread section, at the time of vulcanization, to realize a reduction in the temperature difference between the tire shoulder sections and the vicinity of the tire width-directionally central portion of the tread section at the time of vulcanization, to reduce differences in physical property values from part to part of the tire, thereby enhancing the performance of the tire, and to enhance workability and strength of the mold for vulcanizing and molding a tire, while avoiding formation of spews at a surface of the tire.

The tread mold is provided with a hindrance section that hinders heat from being transferred from the holder member to the piece member, and the hindrance section may be located at a central region in the width direction of the green tire mounted in the mold, between the piece member and the holder member.

According to such a configuration, it is possible to reduce transfer of heat from the shoulder sections to the vicinity of the tire width-directionally central portion of the tread section, to hinder transfer of heat from the holder section to the tire width-directionally central region of the tread section, by the hindrance section located between the holder section and the piece member, to further reduce the temperature difference between the tire shoulder sections and the vicinity of the tire width-directional center of the tread section at the time of vulcanization, to further reduce differences in physical property values from part to part of the tire, and thereby to further enhance the performance of the tire.

The holder member includes a recess recessed from a holder member surface on the piece member side, and the hindrance section may be a gap defined by the recess and the piece member.

According to such a configuration, with the holder member including the recess recessed from a surface on the piece member side and with the hindrance section being the gap defined by the recess and the piece member, it is possible to ensure that the holder member and the piece member do not make contact with each other in a central region in the tire width direction, to thereby securely hinder transfer of heat to the tread section at that part, and to further reduce the temperature difference between the vicinity of the tire shoulder sections and the tire width-directionally central region of the tread section at the time of vulcanization.

The hindrance section may be a heat insulating material sandwiched between the holder member and the piece member.

According to such a configuration, with the hindrance section being the heat insulating material sandwiched between the holder member and the piece member, it is possible to further securely hinder transfer of heat from the holder member to the tire width-directionally central region of the tread section, and to further reduce the temperature difference between the vicinity of the tire shoulder sections and the tire width-directionally central region of the tread section at the time of vulcanization.

The piece member has joint end edges put in contact with and mated with the adjacent piece member, and the joint end edges may be formed in a rugged shape such as to interfere with each other to hinder relative movement of the adjacent piece members in a tire circumferential direction, a tire width direction, and a tire radial direction.

Since the joint end edges of the piece member which make contact with the adjacent piece member are formed in the rugged shape such as to interfere with each other to hinder relative movement of the piece members in the tire circumferential direction, the tire width direction, and the tire radial direction, the piece members can be assuredly held by the holder member.

### [Advantageous Effects of the Invention]

Since the present invention is configured as above-mentioned, it is possible to realize a reduction in the temperature difference between the tire shoulder sections and the vicinity of the tire width-directionally central portion of the tread section at the time of vulcanization, to reduce differences in physical property values from part to part of the tire, thereby enhancing the performance of the tire, and to enhance workability and strength of the mold for vulcanizing and molding a tire, while avoiding formation of spews at the surface of the tire.

### [Brief Description of Drawings]

FIG. 1 is a vertical sectional view of a major part depicting a vulcanizing device in a state in which a mold for vulcanizing and molding a tire of a first embodiment of the present invention is closed.
FIG. 2 is a vertical sectional view of a major part depicting the vulcanizing device in a state in which the mold for vulcanizing and molding a tire is opened.
FIG. 3 is a perspective view, as viewed from an oblique upper side, of a state in which the mold for vulcanizing and molding a tire is opened.
FIG. 4 is a perspective view, as viewed from an oblique lower side, of the state in which the mold for vulcanizing and molding a tire is opened.
FIG. 5 is a perspective view, as viewed from an oblique inner side, of a segment of the mold for vulcanizing and molding a tire.
FIG. 6 is a perspective view of the segment, as viewed from an oblique outer side.
FIG. 7 is an exploded perspective view, as viewed from an oblique inner side, of the segment in which piece members are disassembled.
FIG. 8 is an exploded perspective view, as viewed from an oblique outer side, of the segment in which the piece members are disassembled.
FIG. 9 is a vertical sectional view of a major part depicting the tire vulcanizing device in which a design surface mold is not divided into the piece members.
FIG. 10 is a diagram depicting temperature measurement points of a tire.
FIG. 11 is a graph depicting heating test results of the tire vulcanizing device in which the design surface mold is not divided.
FIG. 12 is a graph depicting heating test results of the tire vulcanizing device of the present embodiment.
FIG. 13 is a graph depicting heating test results of the tire vulcanizing device in which the design surface mold is not divided.
FIG. 14 is a graph depicting heating test results of the tire vulcanizing device of the present embodiment.
FIG. 15 is a diagram depicting a divided shape of the design surface mold of the present embodiment.
FIG. 16 is a diagram depicting a divided shape of the design surface mold of a modification of the present embodiment.
FIG. 17 is a diagram depicting a divided shape of the design surface mold of another modification.
FIG. 18 is a diagram depicting a divided shape of the design surface mold of a further modification.
FIG. 19 is a diagram depicting a divided shape of the design surface mold of yet another modification.
FIG. 20 is a vertical sectional view of a major part depicting a vulcanizing device in a state in which a mold for vulcanizing and molding a tire of a second embodiment of the present invention is closed.
FIG. 21 is an exploded perspective view, as viewed from an oblique inner side, of a segment in which piece members of the mold for vulcanizing and molding a tire of the second embodiment are disassembled.

### [Mode for carrying out the Invention]

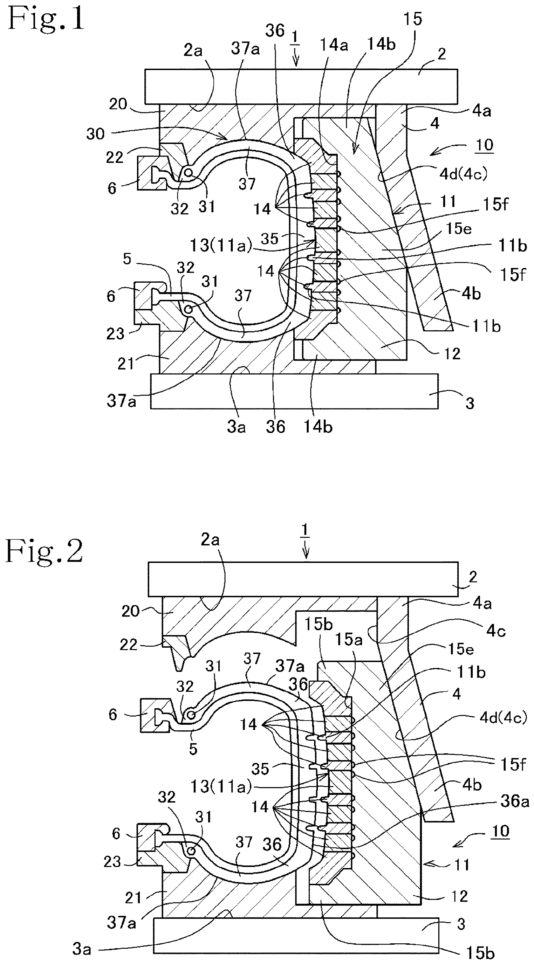

A first embodiment of a mold for vulcanizing and molding a tire according to the present invention will be described referring to FIGS. 1 to 17. FIG. 1 illustrates a tire vulcanizing device 1 in which a mold 10 for vulcanizing and molding a tire of the first embodiment of the present invention is used.

The tire vulcanizing device 1 is for heating a green tire 30 from inside and outside surfaces of the green tire 30 by a heating medium such as steam and a heating device for a predetermined time, while compression molding the green tire 30 before vulcanization by the mold 10 for vulcanizing and molding a tire, to thereby vulcanize the green tire 30.

As depicted in FIG. 1, the green tire 30 before vulcanization and molding includes a pair of upper and lower bead sections 32 in which a ring-shaped bead ring 31 is embedded, a carcass layer (not illustrated) arranged in a toroidal form between the pair of bead sections 32, a belt layer (not illustrated) put in contact with the radial-directionally outer side of the carcass layer, a tread section 35 put in contact with an outer peripheral surface of the belt layer, and side wall sections 37 covering side parts of the tire.

The tire vulcanizing device 1 includes the mold 10 for accommodating, vulcanizing, and molding the green tire 30, an upper container member 2 and a lower container member 3 for holding the mold 10, an outer ring 4 for opening and closing the mold 10, a bladder 5 which is inserted inside the green tire 30 and into which heated steam or the like is fed, a pair of clamp members 6 for holding both ends of the bladder 5, and a heating device such as a platen, a heat plate, or a heater (not illustrated) for heating the mold 10 from inside and outside.

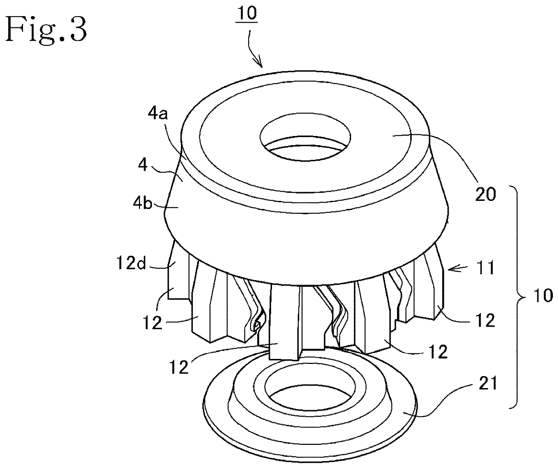

As depicted in FIGS. 1 and 3, the mold 10 for vulcanizing and molding a tire includes an annular tread mold 11 for pressing the tread section 35 of the green tire 30 to mold a tread surface 36a (see FIG. 2), side molds 20 and 21 (upper side mold 20, lower side mold 21) for pressing the side wall sections 37 of the green tire 30 to mold side wall surfaces 37a, and bead molds 22 and 23 (upper bead mold 22, lower bead mold 23) for pressing and molding the bead sections 32.

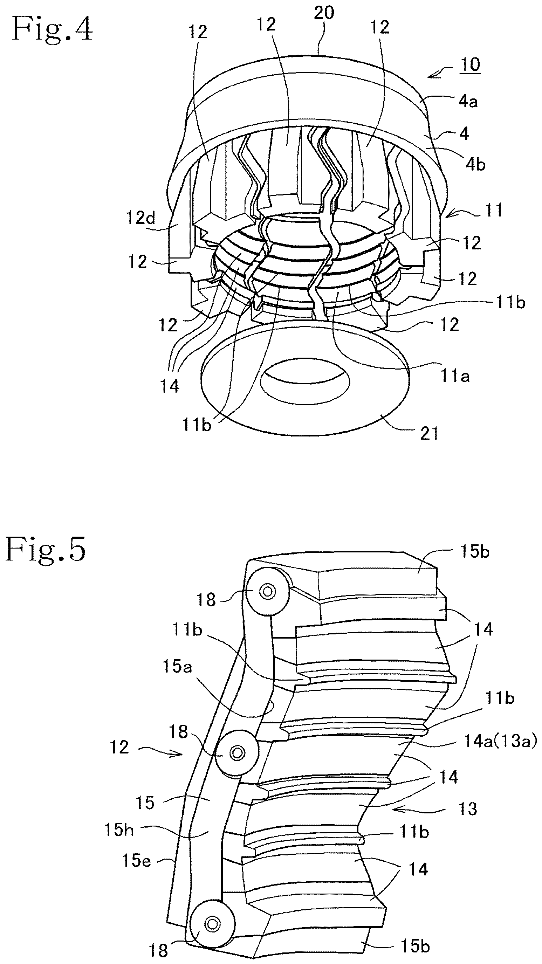

Of the tread mold 11, an inner surface is a molding section 11a formed with a design surface for molding the tread surface 36a of the green tire 30. The molding section 11a is formed with a plurality of projections 11b (see FIG. 5, as well) for molding grooves and recesses of the green tire 30. In the present embodiment, the design surface of the molding section 11a is in a pattern which lacks repeated reproducibility over the whole circumference.

As illustrated in FIG. 1, the green tire 30 in an annular shape is accommodated inside the tread mold 11, with its rotational axis directed in the vertical direction. Therefore, for permitting opening and closing in the radial direction, the tread mold 11 includes a plurality of segments 12 divided in the circumferential direction as depicted in FIGS. 3 and 4. The segments 12 of the tread mold 11 are each arcuate in shape in plan view, and they are combined with one another in the tire circumferential direction to constitute an annular mold as a whole.

In the present embodiment, the tread mold 11 is divided into nine pieces, and includes nine segments 12.

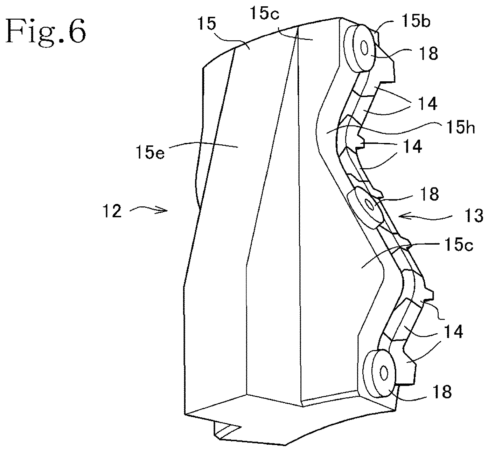

Each of the segments 12 is formed at an outer circumferential surface thereof with an inclined guide projection 15e projecting from an outer surface 15c and increasing in diameter in going downward, as depicted in FIG. 6. As illustrated in FIGS. 1 and 2, all the segments 12 are slidably connected to an inner circumferential surface 4c of the outer ring 4.

As illustrated in FIGS. 3 and 4, the outer ring 4 is provided such as to surround the plurality of segments 12. An upper portion of the outer ring 4 is formed as a cylindrical section 4a having a uniform diameter, and a lower portion of the outer ring 4 located below the cylindrical section 4a is formed as an enlarged diameter section 4b increased in diameter in going downward.

As illustrated in FIGS. 1 and 2, the inner circumferential surface 4c of the enlarged diameter section 4b of the outer ring 4 is also formed to increase in diameter in going downward, and, when all the segments 12 are put closer to each other and connected together, their inclined guide projections 15e are connected to form an inclined guide section 4d which is slid. The outer ring 4 incorporates a heater (not illustrated) of the heating device, and the outer ring 4 is heated by the heater.

As depicted in FIGS. 1 and 3, the upper side mold 20 and the lower side mold 21 face each other in the upper-lower relation, and are each formed in an annular shape. As illustrated in FIG. 1, the upper side mold 20 and the lower side mold 21 respectively press the side wall sections 37 at both side surfaces of the green tire 30 accommodated in the mold 10 for vulcanizing and molding a tire, to mold the side wall surfaces 37a. The upper side mold 20 is fitted and firmly attached to an upper end of the cylindrical section 4a of the outer ring 4. In addition, as depicted in FIG. 2, an upper bead mold 22 is attached to the vicinity of a lower surface center of the upper side mold 20, whereas a lower bead mold 23 is attached to the vicinity of an upper surface center of the lower side mold 21.

As illustrated in FIG. 1, the tire vulcanizing device 1 includes the lower container member 3 mounted to a base (not illustrated), and the upper container member 2 disposed on the upper side of the lower container member 3 to face the lower container member 3. The lower side mold 21 is attached to an upper surface 3a of the lower container member 3. The upper side mold 20 and the outer ring 4 are attached to a lower surface 2a of the upper container member 2.

A heater or the like (not illustrated) of a heating device is incorporated in the upper container member 2 and the lower container member 3. The upper side mold 20 is heated by the upper container member 2, and the lower side mold 21 is heated by the lower container member 3. The upper container member 2 is moved in the vertical direction by lifting means (not illustrated).

As illustrated in FIGS. 1, 5, and 8, each of the segments 12 of the tread mold 11 includes a design surface mold 13 having an inside surface for pressing the tread section 35 and the shoulder section 36 to mold designs of the tread section 35 and the shoulder section 36, and a holder member 15 which holds the design surface mold 13 by fitting and to which heat from the heating device is transferred. An inside surface 13a of the design surface mold 13 is formed with a design surface for pressing the tread section 35 of the green tire 30, to constitute the molding section 11a of the tread mold 11.

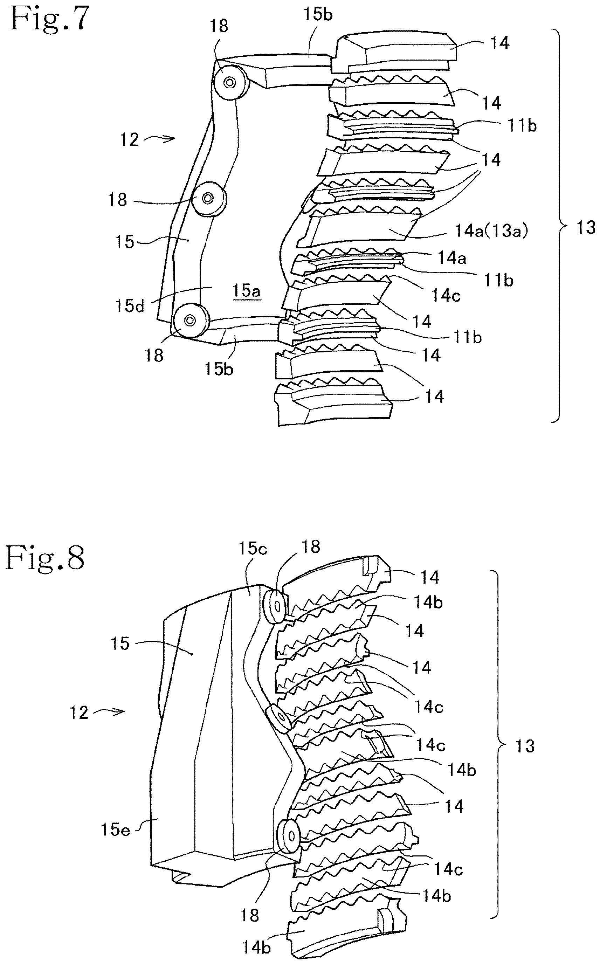

The design surface mold 13 is produced on the basis of the segment 12, and is thereafter divided into a plurality of piece members 14 in the tire width direction as depicted in FIGS. 5 and 7. The piece members 14 are divided along a curved surface by wire discharge processing or the like, for example. In the present embodiment, the design surface mold 13 is divided into eleven pieces, but may be divided into more pieces or less pieces than eleven pieces.

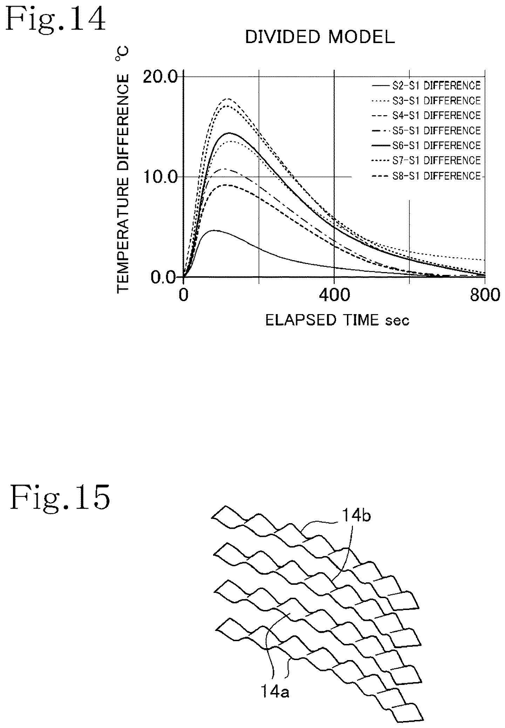

The piece member 14 has a joint end edge 14c put in contact with and mated with the other piece member 14, and the joint end edge 14c is formed in a rugged shape such as to interfere with each other to hinder relative movement of the piece members 14 in a tire circumferential direction, a tire width direction, and a tire radial direction. FIG. 15 depicts a schematic view of the joint end edge 14c of the design surface mold 13 in the present embodiment. In the piece member 14 in the present embodiment, a structure in which the piece member 14 is divided into a frill shape different in amplitude on the side of an inner surface 14a of the piece member 14 and on the side of an outer surface 14b of the piece member 14 is adopted. The frill shape is a curved surface different in curvature amplitude, or wavelength, of both end portions of a section of a curved surface defined by a wavy shape. Since the joint end edge 14c of the piece member 14 is thus locked in the frill shape different in amplitude on the inner surface 14a side and on the outer surface 14b side of the piece member 14, the piece members 14 are fitted and not moved when they are combined with one another and attached to the holder member 15.

In the present embodiment, the joint end edge 14c of the piece member 14 is formed in a frill shape differing in amplitude on the inner surface 14a side and on the outer surface 14b side. However, the joint end edge 14c may be formed in other shapes, insofar as the piece members 14 attached to the holder member 15 are not relatively moved in the circumferential direction.

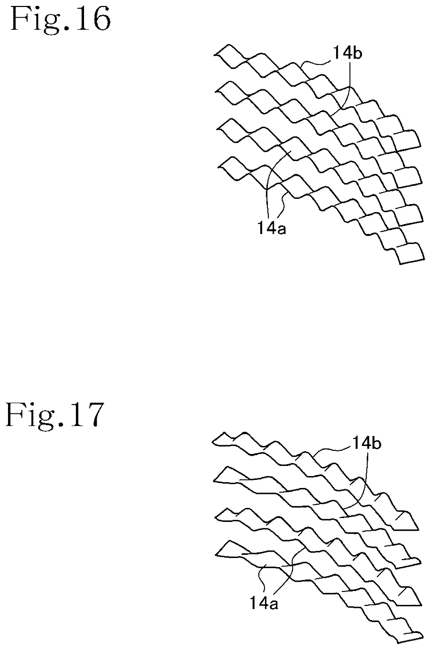

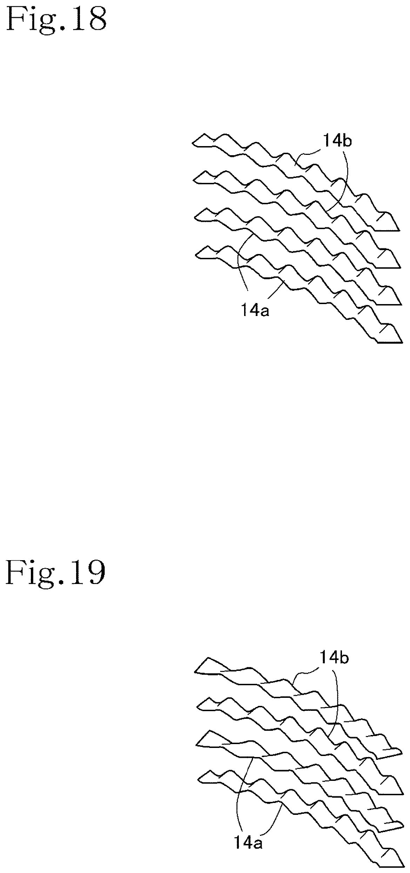

FIGS. 16 to 19 denote other examples of the joint end edge of the piece member 14. For example, the joint end edge may be formed in a frill shape of the same amplitude on the side of the inner surface 14a and on the side of the outer surface 14b as depicted in FIG. 16, may be formed in a wavy shape different in amplitude and orientation on the side of the inner surface 14a and on the side of the outer surface 14b as depicted in FIG. 17, may be formed in a wavy shape different in amplitude but of the same orientation on the inner surface 14a side and on the outer surface 14b side as depicted in FIG. 18, may be formed in a wavy shape of the same amplitude but different in orientation on the side of the inner surface 14a and on the side of the outer surface 14b as depicted in FIG. 19, or the like. With the joint end edge 14c of the piece member 14 set in such a shape, the piece member 14 is prevented from dropping off from the holder member 15.

A steel-made meshed-in insert (not illustrated) of 0.02 mm in thickness and 10 mm in width, for example, is meshed-in between the piece members 14, and a gap of such an extent as to inhibit overflow of rubber of the green tire 30 but to permit passage of air is provided, to provide a function of discharging air inside the mold 10 for vulcanizing and molding a tire.

In the present embodiment, the insert is meshed-in between the piece members 14. However, the insert may not necessarily be meshed-in between the piece members 14, insofar as the comparable gaps can be kept between the piece members 14. Alternatively, for example, an elastic member such as a spring, a gap adjusting member higher in coefficient of thermal expansion than the piece members, or the like may be used.

Since the design surface mold 13 is thus divided into a plurality of piece members 14, heat transfer between the piece members 14 is reduced. Further, with the insert meshed-in between the piece members 14, contact between the piece members is lessened, and heat transfer between the piece members 14 is further reduced. In addition, since the design surface mold 13 is divided in the tire width direction, heat transfer in the tire width direction in the design surface mold 13 is lowered. Heat transfer between the part, of the design surface mold 13 pressing the tread section 35 and the shoulder section 36 of the green tire 30, to be put in contact with the vicinity of a tire width directional center of the tread section 35 and the part, of the design surface mold 13 pressing the tread section 35 and the shoulder section 36 of the green tire 30, to be put in contact with the shoulder section 36 is inhibited.

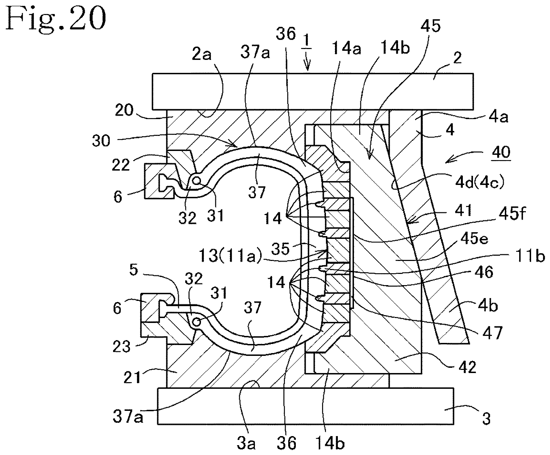

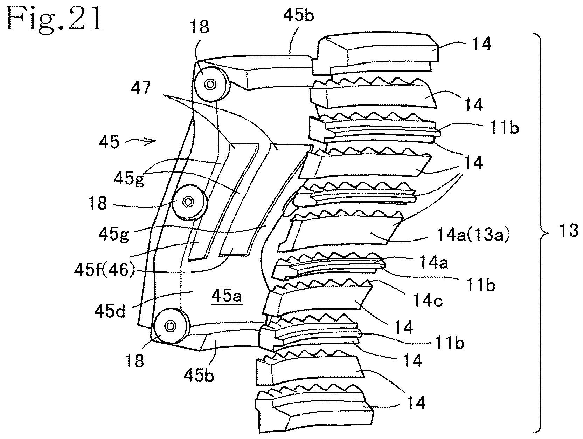

While one segment 12 is divided into eleven pieces of the piece members 14 in the present embodiment, the number of pieces may be more or less than eleven. In the present embodiment, the piece member 14 is divided into a frill shape differing in amplitude on the side of the inner surface 14a and on the side of the outer surface 14b of the piece member 14, but the piece member 14 may be divided into a frill shape of the same amplitude on the side of the inner surface 14a and on the side of the outer surface 14b, as depicted in FIG. 18. Further, the piece member 14 may be divided into a wavy shape differing in amplitude and in orientation on the inner surface 14a side and on the outer surface 14b side as depicted in FIG. 19, or may be divided into a wavy shape differing in amplitude but of the same orientation on the inner surface 14a side ad on the outer surface 14b side as depicted in FIG. 20, or may be divided into a wavy shape of the same amplitude but differing in orientation on the inner surface 14a side and on the outer surface 14b side as depicted in FIG. 21. It is sufficient that the piece members 14 attached to the holder member 15 are formed in such a shape that they are not relatively moved in the circumferential direction. With the piece members 14 divided into such a shape, the piece members 14 are prevented from dropping off from the holder member 15.

In the present embodiment, as illustrated in FIG. 5, the molding section 11a of the tread mold 11 is provided with the projections 11b formed as linear projections substantially parallel to the tire circumferential direction. When the tread mold 11 is pressed against the green tire 30, main grooves in the circumferential direction of the tire are formed by the projections 11b. Since the piece members 14 are divided in the tire width direction, the joint end edges 14c of the piece members 14 thus divided extend along both sides of the projections 11b, whereby the molding section 11a can be made to be a design surface high in accuracy.

Next, the holder member 15 that holds the design surface mold 13 including the plurality of piece members 14 will be described. As illustrated in FIGS. 2 and 7, the holder member 15 is formed in the inside thereof with a piece member fitting-in section 15a into which the plurality of piece members 14 are to be fitted. Projecting sections 15b for holding the design surface mold 13 including the plurality of piece members 14 are provided at both ends in the tire width direction of the piece member fitting-in section 15a. As depicted in FIGS. 1 and 2, the piece member fitting-in section 15a of the holder member 15 is formed with seat grooves 15f. When the mold 10 for vulcanizing and molding a tire is closed, air discharged through gaps between the piece members 14 is passed through the seat grooves 15f and the like, to be discharged to the outside of the mold 10 from the side of the circumferential-directional end surface 15h (FIG. 5) of the holder member 15.

As illustrated in FIG. 6, at an outer surface 15c of the holder member 15, the linear projection shaped inclined guide projection 15e directed in the vertical direction is formed at a substantially central position in the circumferential direction. As depicted in FIGs. 1 and 2, the inclined guide projection 15e is slidably connected to the inclined guide section 4d of the outer ring 4.

The holder member 15 for the tread mold 11 of the segment 12, the design surface mold 13, and the outer ring 4 are produced by various forming processing (casting, mechanical working, sintering, laminate shaping, etc.) while using various metals (for example, steels, aluminum alloys, etc.). In the present embodiment, the holder member 15 of the segment 12 is produced using cast steel corresponding to SS400, the upper side mold 20 and the lower side mold 21 are produced using a forged steel material corresponding to SS400, and the design surface mold 13 is produced, together with the segment 12, by a gypsum casting method while using an aluminum alloy (for example, JIS AC4C or the like).

A procedure for setting the green tire 30 in the tire vulcanizing device 1 and vulcanizing and molding the tire will be described below.

For setting the green tire 30 in the tire vulcanizing device 1 and vulcanizing and molding the tire, the upper container member 2 is moved upward by the lifting means, as depicted in FIG. 2. Attendant on this, the outer ring 4 is moved upward, all the segments 12 of the tread mold 11 are guided slidingly along the inclined surface of the inclined guide section 4d of the outer ring 4 and moved toward the radial-directionally outer side, and the mold 10 for vulcanizing and molding a tire of the tire vulcanizing device 1 is put in a radially opened state.

In such a state in which the mold 10 for vulcanizing, and molding a tire is opened, the green tire 30 with the bladder 5 and the clamp members 6 for holding the bladder 5 preliminarily set at predetermined positions is disposed in the mold 10.

Thereafter, the lifting means is operated downward, as illustrated in FIG. 1. Attendant on the downward movement of the lifting means, the upper container member 2 is lowered, and the outer ring 4, the tread mold 11, the upper side mold 20 and the upper bead mold 22 are moved downward. When the segments 12 make contact with the upper surface of the lower side mold 21, the segments 12 are moved toward the radial-directionally inner side while guided by the inclined guide section 4d of the outer ring 4, and the mold 10 for vulcanizing and molding a tire is closed, into a closed state of accommodating the green tire 30 therein. When the mold 10 is put into the closed state, green rubber of the green tire 30 does not go out through the gaps between the piece members 14 attached to the holder member 15, but air in the tread mold 11 is discharged through the gaps between the piece members 14, and is discharged to the outside of the mold 10 through the seat grooves 15f of the holder member 15 and the like. In such a state, by the heating device disposed inside the upper container member 2, the lower container member 3, the outer ring 4, and high-temperature steam sent into the bladder 5, and the like, the green tire 30 is heated to a preset vulcanizing temperature for a predetermined time, thereby being vulcanized and molded.

After the green tire 30 is vulcanized and molded, the lifting means of the tire vulcanizing device 1 is operated upward, whereby the upper container member 2 is moved upward. Attendant on the movement of the upper container member 2, the outer ring 4 is moved upward, the inclined guide projection 15e of the holder member 15 of each segment 12 is slid along the inclined guide section 4d formed on the inside of the outer ring 4, and the segment 12 is moved toward the radial-directionally outer side. Therefore, the mold 10 for vulcanizing and molding a tire is put into a radially opened state, as depicted in FIG. 2. Next, the lifting means is stopped, and the tire of which the vulcanization and molding are finished in the tire vulcanizing device 1 is taken out.

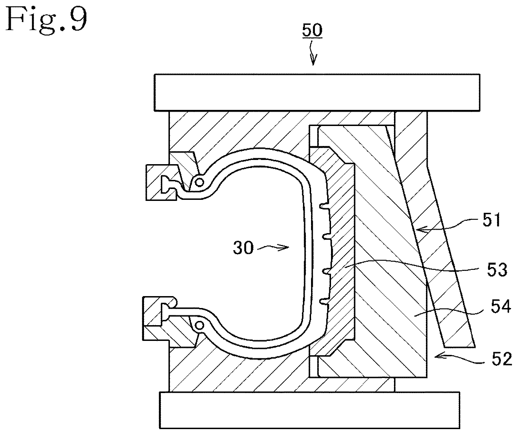

Next, description will be made of a comparative heat transfer experiment of the green tire 30 in the case of heating the green tire 30, by use of the mold 10 (the mold will hereinafter be referred to as a width-directionally divided model) for vulcanizing and molding a tire in which the design surface mold 13 includes the piece members 14 divided in the tire width direction according to the present embodiment and a mold 50 (the mold will hereinafter be referred to as a non-divided model) for vulcanizing and molding a tire in which a design surface mold 53 of a segment 52 of a tread mold 51 is not divided into piece members in the tire width direction as depicted in FIG. 9.

A first test was conducted using a tire vulcanizing device in which the mold 10 for vulcanizing and molding a tire of the tire vulcanizing device 1 of the present embodiment is replaced by the non-divided model mold 50 for vulcanizing and molding a tire.

A second test was performed using the tire vulcanizing device 1 including the mold 10 for vulcanizing and molding a tire of the width-directionally divided model of the present embodiment.

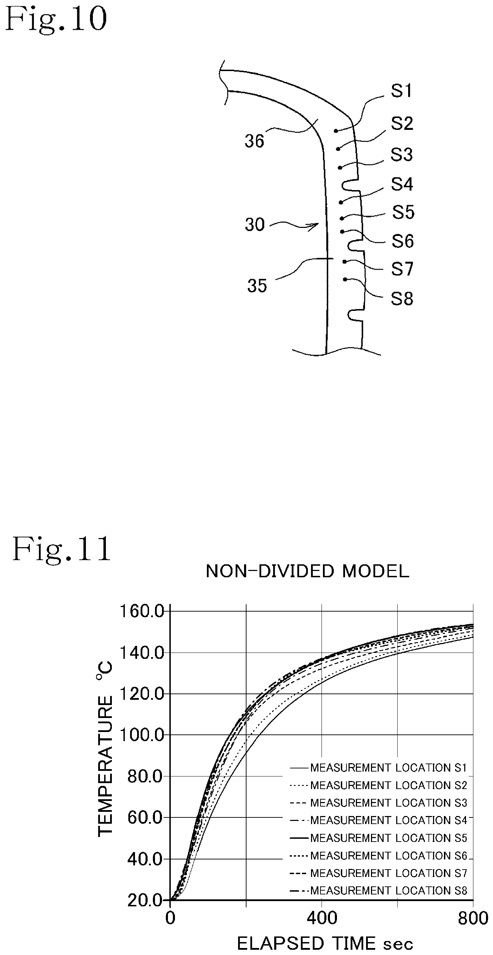

In the heating test, temperature measurement was performed at temperature measurement locations S1 to S8 of the green tire 30 depicted in FIG. 10. From the start of heating of the green tire 30 until 800 seconds after the start, the temperatures at the temperature measurement locations S1 to S8 were measured and recorded. S1 is located in the vicinity of the shoulder section 36, while S8 is located in the width-directional center of the tread section 35 of the green tire 30. S2 to S7 are located at substantially regular intervals from the shoulder section 36 toward the tire width-directional center. The temperature measurement locations S1 to S8 are located at a depth corresponding to one half the thickness of the respective tire parts, from the surface of the tread section 35.

In addition, both the first test and the second test were performed in the following heat transfer analysis conditions, initial conditions, and boundary conditions.

**[Table 1]**

| | Material | Density | Specific heat | Thermal conductivity | Initial temperature |
|---|---|---|---|---|---|
| | | g/cm3 | cal/g·°C | cal/cm·sec·°C | °C |
| Piece member | Aluminum alloy (AC4C) | 2.680 | 0.230 | 0.370 | 160 |
| Holder member, Side plate, Outer ring | Carbon steel (SS400) | 7.800 | 0.180 | 0.126 | 160 |
| Steam | | 0.907 | 1.037 | 0.0016 | 170 |
| Heating device (Heat plate) | | 7.800 | 0.110 | 0.126 | 170 |
| Outside air | Air | 0.0012 | 0.240 | 0.0001 | 20 |

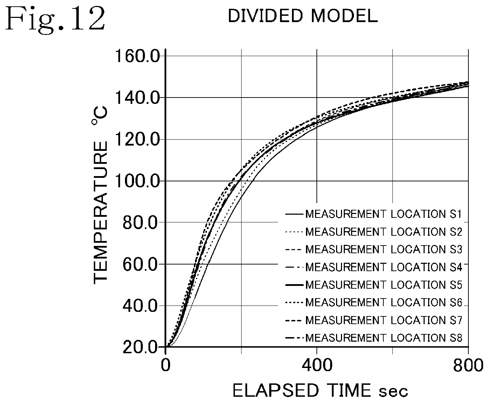

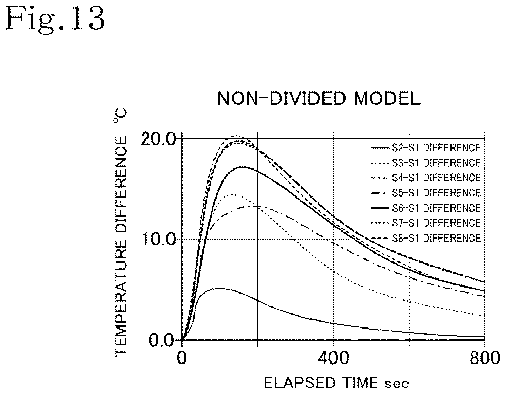

The results of the first test (non-divided model) are depicted in FIGS. 11 and 13, while the results of the second test (width-directionally divided model) are depicted in FIGS. 12 and 14.

In FIGS. 11 and 12, with heating elapsed time (sec) taken on the axis of abscissas, and with temperature (°C) taken on the axis of ordinates, temperature variations at the temperature measurement locations S1 to S8 are depicted in the graphs.

In FIGS. 13 and 14, with heating elapsed time (sec) taken on the axis of abscissas, and temperature difference (°C) between the temperature at each of the temperature measurement locations S2 to S8 at the temperature measurement locations S2 to S8 and the temperature at the temperature measurement location S1 taken on the axis of ordinates, variations of the difference are depicted in the graphs.

Referring to FIG. 11 of the results of the first test using the non-divided model, temperature rise is gentle at the temperature measurement location S1 in the vicinity of the shoulder section, but temperature rise is steep at the temperature measurement location S8 at a tire width-directionally central portion of the tread section 35. In addition, as depicted in FIG. 13, the temperature difference between the temperature measurement location S8 at the tire width-directionally central portion of the tread section 35 and the temperature measurement location S1 in the vicinity of the shoulder section 36 reaches a maximum of 20.2°C in the vicinity of an elapsed time of 130 seconds, and is 6.3°C even after the lapse of 800 seconds.

Referring to FIG. 12 depicting the results of the second test using the width-directionally divided model according to the present embodiment, at the temperature measurement location S1 in the vicinity of the shoulder section 36, temperature rise is gentle similarly to FIG. 11 depicting the results of the first test. However, at the temperature measurement location S8 at the tire width-directionally central portion of the tread section 35, temperature rise is not steep as compared with that in FIG. 11 depicting the results of the first test of the non-divided model, but is approaching the temperature graph of the temperature measurement location S1.

Besides, as illustrated in FIG. 14, the temperature difference between the temperature measurement location S8 at the tire width-directionally central portion of the tread section 35 and the temperature measurement location S1 in the vicinity of the shoulder section 36 reaches a maximum of 17.6°C in the vicinity of an elapsed time of 115 seconds, and the temperature difference after the lapse of 800 seconds is equal to or less than 1°C. The temperature difference between the temperature measurement location S1 in the vicinity of the shoulder section 36 and the temperature measurement location S8 at the tire width-directionally central portion of the tread section 35 is largely reduced as compared to that in FIG. 11. In addition, also at each of the other temperature measurement locations S2 to S7, the temperature difference relative to the temperature measurement location S1 is reduced to approximately one half or less than one half as compared to the first test results, and the internal temperature difference between each part of the tire and the vicinity of the shoulder section 36 is reduced, as is seen.

From these test results, it has been found that by using the plurality of piece members 14 into which the design surface mold 13 is divided in the tire width direction, it is possible to reduce the temperature difference between the vicinity of the tire width-directional center of the tread section 35 and the vicinity of the shoulder section 36 of the green tire 30 at the time of vulcanization, and to reduce the temperature differences in the whole tire at the time of vulcanization.

Since the first embodiment is configured as above-described, it produces the following effects.

The mold 10 for vulcanizing and molding a tire of the first embodiment is heated by a heating device, steam sent into the bladder 5, or the like, for vulcanizing and molding the green tire 30. The mold 10 includes the tread mold 11 that is arranged in the tire circumferential direction and is put in contact with the tread section 35 of the green tire 30, and the tread mold 11 includes a plurality of segments 12 divided in the tire circumferential direction. The segments 12 each include the design surface mold 13 of which an inside surface is put in contact with the tread section 35 and which molds a design of the tread section 35, and the holder member 15 which holds the design surface mold 13 and transfers heat from the heating device. The design surface mold 13 includes the plurality of piece members 14 divided in the tire width direction.

Since the present embodiment is configured as above-mentioned, air in the mold 10 for vulcanizing and molding a tire is easily discharged through gaps between the piece members 14, and generation of spews at the surface of the tire can be avoided.

With the design surface mold 13 including the plurality of piece members 14 divided in the tire width direction, it is possible to prevent heat transfer from the shoulder section 36 to the tire width-directional center of the tread section 35, to realize a reduction in the temperature difference between the shoulder section 36 and the vicinity of the tire width-directional center of the tread section 35 of the green tire 30 at the time of vulcanization, and to reduce differences between physical property values of parts of the tire, thereby enhancing the performance of the tire.

Further, with the design surface mold 13 including the plurality of piece members 14 divided in the tire width direction, it is ensured that, even in the case where the shape of the design of the design surface mold 13 for the tire cannot be defined by repetition of a fixed shape toward the circumferential direction, a multiplicity of definitions of divided curved surface shapes is not needed for forming slits at positions for easy venting of air at the time of dividing, and it is possible to enhance workability and to reduce cost.

In addition, since the design surface mold 13 is configured as above-described, it is possible to form the design surface of the design surface mold 13 by casting and thereafter perform curved surface division, whereby the need to form the shape of the design surface by electric discharge machining or the like in an after-processing is eliminated, and workability is enhanced.

Further, since the piece members 14 divided in the tire width direction are assembled to form the design surface mold 13 and the design surface mold 13 is held by the holder member 15, concentrated forces are not generated at front edges of divided curved surfaces, and, even when the mold is used repeatedly, creep deformation is not generated in the piece members 14, and the trouble of overflowing of rubber is not generated.

Of front edges of the piece members 14, the joint end edges 14c put in contact with and mated with other piece members 14 are formed in a frill shape differing in amplitude on the inner surface 14a side and on the outer surface 14b side such as to interfere with each other and to be non-movable in the tire circumferential direction, the tire width direction, and the tire radial direction; therefore, the piece members 14 are assuredly held by the holder member 15.

Next, a mold 40 for vulcanizing and molding a tire of the second embodiment will be described referring to FIGS. 20 and 21. The mold 40 for vulcanizing and molding a tire of the second embodiment uses a holder member 45 in place of the holder member 15 used in the first embodiment, and the other configurations of the mold 40 are similar to those in the first embodiment, therefore, the other configurations will be described using the same reference symbols as used above.

In the mold 40 for vulcanizing and molding a tire of the second embodiment, the holder member 45 as illustrated in FIG. 20 is used. The holder member 45 is provided with a hindrance section 46 which hinders transfer of heat from the holder member 45 to the piece members 14, while being located in a central region with a predetermined width from the tire width-directional center of a piece member fitting-in section 45a toward both ends of the tread section 35.

The holder member 45 is formed with a recess 45f recessed further from a bottom surface of the piece member fitting-in section 45a. In the present embodiment, the recess 45f is provided in a region of approximately two thirds of the distance from the tire width directional center of the tread section 35 to the shoulder section 36. While the recess 45f is formed in this way in the present embodiment, the recess 45f may be a wider region or a narrower region than this region, insofar that it has a predetermined width from the tire width-directional center of the tread section 35.

As illustrated in FIG. 20, when the piece members 14 are attached to the holder member 45, due to the presence of a gap 47 between the recess 45f and the piece members 14, the holder member 45 and the piece members 14 at the part where the recess 45f is provided do not make contact with each other, so that transfer of heat from the holder member 45 to the piece members 14 is hindered. Thus, the recess 45f plays the role of the hindrance section 46.

The holder member 45 and the piece members 14 located in a tire width-directionally central region of the tread section 35 of the green tire 30 do not make direct contact with each other, due to the presence of the hindrance section 46. Therefore, transfer of heat from the holder member 45, which incorporates the heating device, to the piece members 14 located in the tire width-directionally central region of the tread section 35 of the green tire 30 is hindered.

In the inside of the recess 45f of the holder member 45, piece member movement preventing sections 45g are provided in such a manner as to project from the bottom surface of the recess 45f and to be flush with an inner surface 45d of the holder member 45. The piece member movement preventing sections 45g are formed so as to have predetermined widths, at both left and right ends of the holder member 45 and substantially at the tire circumferential-directional center of the holder member 45, in such a manner as to connect that part of the inner surface 45d of the holder member 45 which is upper than the recess 45f and that part of the inner surface 45d which is lower than the recess 45f. When the mold 40 for vulcanizing and molding a tire is put in a closed state while accommodating the green tire 30 and the piece members 14 are in contact with the tread section 35 of the green tire 30, even the piece members 14 disposed at positions facing the hindrance section 46 which is the gap 47 are prevented from moving toward, by being pushed in, the bottom surface of the recess 45f, by the piece member movement preventing sections 45g.

In the present embodiment, the piece member movement preventing sections 45g are formed in a rectilinear shape at both the left and right ends of the recess 45f and at substantially the tire circumferential-directional center of the holder member 45, as above-mentioned. However, the piece member movement preventing sections 45g may be in a circular shape or other shapes, insofar as the piece members 14 are not pushed in toward the bottom surface of the recess 45f, the area of contact of the piece member movement preventing sections 45g with the piece members 14 is small, and the piece member movement preventing sections 45g are projecting from the bottom surface of the recess 45f to be flush with the inner surface 45d of the holder member.

Since the piece members 14 and the holder member 45 are configured in this way, it is ensured that, when the design surface mold 13 obtained by assembling the plurality of piece members 14 is fitted into the piece member fitting-in section 45a of the holder member 45 and a fixing member 18 is attached to the circumferential-directional end surface 45h of the holder member 45 as depicted in FIGS. 5 and 6, the piece members 14 are securely fixed to the holder member 45 and do not move, and the piece members 14 are prevented from dropping off from the holder member 45 or being pushed into the inside of the holder member 45.

In addition, while the recess 45f is provided in the holder member 45 and the gap 47 is used as the hindrance section 46 in the second embodiment, a heat insulating material may be inserted in the recess 45f to form the hindrance section 46. As the heat insulating material, a material having a thermal conductivity lower than the thermal conductivity of the tread mold 41 is used. For example, the tread mold 41 is formed using a metal such as steel or an aluminum alloy, and is processed by any of various kinds of shaping such as casting, mechanical working sintering, or lamination structure; as the heat insulating material, a heat insulating material such as rubber or glass wool may also be used.

The tread mold 41 includes the hindrance section 46 that hinders transfer of heat from the holder member 45 to the piece members 14, in a tire width-directionally central region between the piece members 14 and the holder member 45. Therefore, transfer of heat from the heated holder member 45 to the tire width-directional center of the tread section 35 of the green tire 30 can be hindered more securely.

Besides, the holder member 45 includes the recess 45f recessed from the surface on the piece member 14 side, and the hindrance section 46 is the gap 47 defined by the recess 45f and the piece member 14. Therefore, by the gap 47 between the recess 45f of the holder member 45 and the piece member 14, transfer of heat from that part of the piece member 14 which makes contact with the shoulder section 36 of the green tire 30 to the tire width-directionally central region of the tread section 35 can be hindered securely, and the temperature difference between the shoulder section 36 and the vicinity of the tire width-directional center of the tread section 35 of the green tire 30 at the time of vulcanization can be reduced.

Further, the hindrance section 46 may be a heat insulating material sandwiched between the holder member 45 and the piece member 14. In this case, transfer of heat from that part of the piece member 14 which makes contact with the shoulder section 36 of the green tire 30 to the tire width-directionally central region of the tread section 35 can be hindered more assuredly, and the temperature difference between the tire shoulder section and the vicinity of the tire width-directional center at the time of vulcanization can be further reduced.

While the embodiments of the present invention have been described in detail above, the invention is not limited to the above-described embodiments, and other various modifications are possible.

### [Reference Signs List]

1 ··· Tire vulcanizing device, 10 ··· Mold for vulcanizing and molding tire, 11 ··· Tread mold, 12 ··· Segment, 13 ··· Design surface mold, 14 ··· Piece member, 14c ··· Joint end edge, 15 ··· Holder member, 30 ··· Green tire, 35 ··· Tread section, 40 ··· Mold for vulcanizing and molding tire, 41 ··· Tread mold, 45 ··· Holder member, 45f ··· Recess, 46 ··· Hindrance section, 47 ... Gap.

## Claims

1. A mold (10) for vulcanizing and molding an unvulcanized green tire (30) heated by a heating device, the mold comprising:
a tread mold (11) that presses a tread section (35) of the green tire,
wherein the tread mold (11) includes a plurality of segments (12) divided in a circumferential direction of the green tire (30) mounted in the mold (10),
the segment (12) is provided inside thereof with a design surface mold (13) for pressing the tread section and molding a design of the tread section (35), and is provided with a holder member (15) for holding the design surface mold (13) and transferring heat from the heating device, and
the design surface mold (13) includes a plurality of piece members (14) divided in a width direction of the green tire (30) mounted in the mold (10),
wherein the tread mold (11) is provided with a hindrance section (46) that hinders heat from being transferred from the holder member (45) to the piece members (14),
**characterized in that**
the hindrance section (46) is located at a central region in the width direction of the green tire (30) mounted in the mold (10), between the piece members (14) and the holder member (45)
wherein the holder member (45) includes a recess (45f) recessed from a holder member (45) surface on the piece member side, and
the hindrance section (46) is a gap (47) defined by the recess and the piece members, and
wherein the piece members (14) have joint end edges (14c) put in contact with and mated with an adjacent piece member (14), and the joint end edges (14c) are formed in a rugged shape such as to interfere with each other to hinder relative movement of the adjacent piece member (14) in a tire circumferential direction, a tire width direction, and a tire radial direction.

2. The mold (10) for vulcanizing and molding a tire (30) as claimed in claim 1,
wherein the hindrance section (46) is a heat insulating material sandwiched between the holder member (45) and the piece members (14).

3. The mold (10) for vulcanizing and molding a tire (30) as claimed in claim 1 or 2,
wherein the rugged shape of the joint end edge (14c) of each piece member (14) is formed in a frill shape differing in amplitude on an inner surface side and on an outer surface side of the piece member (14).

4. The mold (10) for vulcanizing and molding a tire (30) as claimed in claim 1 or 2,
wherein the rugged shape of the joint end edge (14c) of the piece member is formed in a frill shape of a same amplitude on an inner surface side and on an outer surface side of the piece member (14).

5. The mold (10) for vulcanizing and molding a tire (30) as claimed in claim 1 or 2,
wherein the rugged shape of the joint end edge (14c) of the piece member (14) is formed in a wavy shape differing in amplitude and orientation on an inner surface side and on an outer surface side of the piece member (14).

6. The mold (10) for vulcanizing and molding a tire (30) as claimed in claim 1 or 2,
wherein the rugged shape of the joint end edge (14c) of the piece member (14) is formed in a wavy shape differing in amplitude but of a same orientation on an inner surface side and on an outer surface side of the piece member (14).

## Patentansprüche

1. Form (10) zum Vulkanisieren und Formen eines nichtvulkanisierten Reifenrohlings (30), der durch eine Heizsektion erwärmt wird, wobei die Form Folgendes umfasst:
eine Laufflächenform (11), die eine Laufflächensektion (35) des Reifenrohlings presst,
wobei die Laufflächenform (11) eine Vielzahl von Segmenten (12) einschließt, die in einer Umfangsrichtung des in der Form (10) montierten Reifenrohlings (30) geteilt sind,
das Segment (12) innerhalb desselben mit einer Profiloberflächenform (13) zum Pressen der Laufflächensektion und Formen eines Profils der Laufflächensektion (35) versehen ist und mit einem Halterelement (15) zum Halten der Profiloberflächenform (13) und Übertragen von Wärme von der Heizvorrichtung versehen ist und
die Profiloberflächenform (13) eine Vielzahl von Teilelementen (14) einschließt, die in einer Breitenrichtung des in der Form (10) montierten Reifenrohlings (30) geteilt sind,
wobei die Laufflächenform (11) mit einer Verhinderungssektion (46) versehen ist, die verhindert, dass Wärme von dem Halterelement (45) zu den Teilelementen (14) übertragen wird,
**dadurch gekennzeichnet, dass**
die Verhinderungssektion (46) an einem mittigen Bereich in der Breitenrichtung des in der Form (10) montierten Reifenrohlings (30), zwischen den Teilelementen (14) und dem Halterelement (45), angeordnet ist,
wobei das Halterelement (45) eine Aussparung (45f) einschließt, die auf der Teilelementseite von einer Oberfläche des Halterelements (45) ausgespart ist, und
die Verhinderungssektion (46) ein Spalt (47) ist, der durch die Aussparung und die Teilelemente definiert wird, und
wobei die Teilelemente (14) verbundene Endkanten (14c) aufweisen, die mit einem benachbarten Teilelement (14) in Berührung gebracht und zusammengepasst sind, und die verbundenen Endkanten (14c) derart zu einer zerfurchten Form geformt sind, dass sie zusammenwirken, um eine relative Bewegung des benachbarten Teilelements (14) in einer Reifenumfangsrichtung, einer Reifenbreitenrichtung und einer Reifenradialrichtung zu verhindern.

2. Form (10) zum Vulkanisieren und Formen eines Reifens (30) nach Anspruch 1,
wobei die Verhinderungssektion (46) ein wärmeisolierendes Material ist, das zwischen dem Halterelement (45) und den Teilelementen (14) eingeklemmt ist.

3. Form (10) zum Vulkanisieren und Formen eines Reifens (30) nach Anspruch 1 oder 2,
wobei die zerfurchte Form der verbundenen Endkante (14c) jedes Teilelements (14) in einer Kräuselform, die sich in der Amplitude unterscheidet, auf einer Innenflächenseite und auf einer Außenflächenseine des Teilelements (14) geformt ist.

4. Form (10) zum Vulkanisieren und Formen eines Reifens (30) nach Anspruch 1 oder 2,
wobei die zerfurchte Form der verbundenen Endkante (14c) des Teilelements in einer Kräuselform mit einer gleichen Amplitude auf einer Innenflächenseite und auf einer Außenflächenseine des Teilelements (14) geformt ist.

5. Form (10) zum Vulkanisieren und Formen eines Reifens (30) nach Anspruch 1 oder 2,
wobei die zerfurchte Form der verbundenen Endkante (14c) des Teilelements in einer welligen Form, die sich in Amplitude und Ausrichtung unterscheidet, auf einer Innenflächenseite und auf einer Außenflächenseine des Teilelements (14) geformt ist.

6. Form (10) zum Vulkanisieren und Formen eines Reifens (30) nach Anspruch 1 oder 2,
wobei die zerfurchte Form der verbundenen Endkante (14c) des Teilelements (14) in einer welligen Form, die sich in der Amplitude unterscheidet, aber mit einer gleichen Ausrichtung, auf einer Innenflächenseite und auf einer Außenflächenseine des Teilelements (14) geformt ist.

## Revendications

1. Moule (10) pour vulcaniser et mouler un pneu cru non volcanisé (30) chauffé par un dispositif de chauffage, le moule comprenant :
un moule de bande de roulement (11) qui presse une section de bande de roulement (35) du pneu cru ;
dans lequel le moule de bande de roulement (11) inclut une pluralité de segments (12) divisés dans une direction circonférentielle du pneu cru (30) monté dans le moule (10) ;
le segment (12) est pourvu en son sein d'un moule de surface à motif (13) pour presser la section de bande de roulement et mouler un motif de la section de bande de roulement (35), et est pourvu d'un élément de support (15) pour supporter le moule de surface à motif (13) et transférer de la chaleur à partir du dispositif de chauffage ; et
le moule de surface à motif (13) inclut une pluralité d'éléments de pièce (14) divisés dans une direction de la largeur du pneu cru (30) monté dans le moule (10) ;
dans lequel le moule de bande de roulement (11) est pourvu d'une section d'empêchement (46) qui empêche le transfert de chaleur depuis l'élément de support (45) aux éléments de pièce (14) ;
**caractérisé en ce que** :
la section d'empêchement (46) est disposée au niveau d'une région centrale, dans la direction de la largeur du pneu cru (30) monté dans le moule (10), entre les éléments de pièce (14) et l'élément de support (45) ;
dans lequel l'élément de support (45) inclut un évidement (45f) évidée par rapport à une surface de l'élément de support (45) sur le côté de l'élément de pièce ; et
la section d'empêchement (46) est un espace (47) défini par l'évidement et les éléments de pièce ; et
dans lequel les éléments de pièce (14) ont des bords d'extrémité de jonction (14c) mis en contact et accouplés avec un élément de pièce adjacent (4), et les bords d'extrémité de jonction (14c) sont formés en une forme sillonnée de sorte à interférer les uns avec les autres pour empêcher un déplacement relatif de l'élément de pièce adjacent (14) dans une direction circonférentielle du pneu, une direction de la largeur du pneu et une direction radiale du pneu.

2. Moule (10) pour vulcaniser et mouler un pneu (30) selon la revendication 1,
dans lequel la section d'empêchement (46) est un matériau à isolation thermique pris en sandwich entre l'élément de support (45) et les éléments de pièce (14).

3. Moule (10) pour vulcaniser et mouler un pneu (30) selon les revendications 1 ou 2,
dans lequel la forme sillonnée du bord d'extrémité de jonction (14c) de chaque élément de pièce (14) est formée en une forme de frange dont l'amplitude diffère sur un côté de surface interne et un côté de surface externe de l'élément de pièce (14).

4. Moule (10) pour vulcaniser et mouler un pneu (30) selon la revendication 1 ou 2,
dans lequel la forme sillonnée du bord d'extrémité de jonction (14c) de l'élément de pièce est formée en une forme de frange avec une même amplitude sur un côté de surface interne et un côté de surface externe de l'élément de pièce (14).

5. Moule (10) pour vulcaniser et mouler un pneu (30) selon la revendication 1 ou 2,
dans lequel la forme sillonnée du bord d'extrémité de jonction (14c) de l'élément de pièce est formée en une forme ondulée dont l'amplitude et l'orientation diffèrent sur un côté de surface interne et un côté de surface externe de l'élément de pièce (14).

6. Moule (10) pour vulcaniser et mouler un pneu (30) selon la revendication 1 ou 2,
dans lequel la forme sillonnée du bord d'extrémité de jonction (14c) de l'élément de pièce (14) est formée en une forme ondulée dont l'amplitude diffère, mais ayant la même orientation sur un côté de surface interne et un côté de surface externe de l'élément de pièce (14).
